# EUROPÄISCHE PATENTSCHRIFT

(11) **EP 4 238 077 B1**
(45) Veröffentlichungstag und Bekanntmachung des Hinweises auf die Patenterteilung: **15.10.2025**
(21) Anmeldenummer: 21749634.8
(22) Anmeldetag: 27.07.2021
(51) Int. Cl.: H04L 67/12, G08G 1/01

(54) **VERFAHREN ZUR BEREITSTELLUNG VON INFORMATIONEN ÜBER VERKEHRSTEILNEHMER**
METHOD FOR PROVIDING INFORMATION ABOUT ROAD USERS
PROCÉDÉ POUR FOURNIR DES INFORMATIONS SUR LES USAGERS DE LA ROUTE

(30) Priorität: 02.11.2020 DE 102020006719
(43) Veröffentlichungstag der Anmeldung: 06.09.2023
(73) Patentinhaber: Mercedes-Benz Group AG, 70372 Stuttgart (DE)
(72) Erfinder: PETROVIC, Andreas, 70567 Stuttgart (DE)
(74) Vertreter: Novagraaf Group
(86) Internationale Anmeldenummer: PCT/EP2021/071064
(87) Internationale Veröffentlichungsnummer: WO 2022/089800

(56) Entgegenhaltungen:
- US-A1- 2019 113 918
- US-A1- 2019 236 955
- US-A1- 2019 294 889
- ZOU RUIMIN: "Free Space Detection Based On Occupancy Gridmaps, Master-Thesis", 30 April 2012 (2012-04-30), XP055798356, Retrieved from the Internet <URL:https://www.ias.informatik.tu-darmstadt.de/uploads/Theses/Zhou_MScThesis_2012.pdf> [retrieved on 20210423]

## Beschreibung

Die Erfindung betrifft ein Verfahren zur Bereitstellung von Informationen über Verkehrsteilnehmer gemäß dem Oberbegriff des Patentanspruchs 1.

Die Erfindung betrifft weiterhin ein Verfahren zum Betrieb eines automatisiert, insbesondere hochautomatisiert oder autonom betreibbaren Fahrzeugs.

Aus der DE 10 2013 210 263 A1 ist ein Verfahren zum Bereitstellen einer Belegungskarte für ein Fahrzeug bekannt, bei dem eine Fahrsituation des Fahrzeugs mittels einer Ermittlungseinrichtung aus mittels mehrerer Sensoreinrichtungen erfassten Daten eines Fahrzeugumfelds ermittelt wird und eine Ausgestaltung der Belegungskarte in Abhängigkeit von der Fahrsituation angepasst wird. Die Belegungskarte weist mehrere gitterartig angeordnete Zellen auf, welche in Abhängigkeit von der Fahrsituation des Fahrzeugs an die Fahrsituation angepasst werden.

Weiterhin ist aus der DE 10 2010 011 629 A1 ein Verfahren zur Umgebungsrepräsentation eines Fahrzeugs bekannt, bei dem Umgebungsdaten erfasst und in hierarchischen Datenstrukturen abgelegt werden und in der Umgebung Objekte identifiziert werden. Eine Relevanz der Objekte bezüglich einer Anwendung wird ermittelt und ein Detaillierungsgrad der hierarchischen Datenstrukturen wird in Bereichen erhöht, in denen Objekte mit hoher anwendungsspezifischer Relevanz erfasst werden. Hierbei werden die Umgebungsdaten als Sensormessdaten in Belegungsgitter eingetragen, um eine probabilistische Umgebungsrepräsentation zu erhalten. Jede Zelle des Belegungsgitters enthält eine Belegungswahrscheinlichkeit, welche aufgrund der Sensormessdaten an dieser Stelle berechnet wurde.

Aus der US 2019/113918 A1 ist ein Verfahren zur Steuerung eines autonomen Fahrzeugs unter Berücksichtigungen von Informationen über Verkehrsteilnehmer bekannt, bei dem vorgesehen ist, dass die Informationen über die Verkehrsteilnehmer in ein Belegungsgitter hinterlegt werden. Das autonome Fahrzeug erzeugt dabei das Belegungsgitter selbst und befüllt die Gitterzellen des Belegungsgitters mit Daten, die es mit seinen eigenen Sensoren erfasst. Bei den Daten handelt es sich um eine Höhe eines Objekts, das die jeweilige Gitterzelle belegt, um eine Geschwindigkeit des Objekts, das die jeweilige Gitterzelle belegt, und um einen Typ des Objekts, das die jeweilige Gitterzelle belegt. Das autonome Fahrzeug kann das Belegungsgitter alternativ auch von externen Einrichtungen oder Systemen erhalten.

Aus der US 2019/294 889 A1 ist ein Verfahren zur Erkennung von Belegungen von Parkplätzen bekannt, das auf einer kamerabasierten Erkennung und Verfolgung von Objekten basiert.

Aus der US 2019/236 955 A1 ist ein Verfahren zur Führung eines autonomen Fahrzeugs bekannt, bei dem vorgesehen ist, dass das Fahrzeug bei einer unzureichenden Umgebungserfassung zusätzliche Daten von anderen Fahrzeugen abfragt.

Aus der Druckschrift Zou Roumin "Free Space Detection Based on Occupancy Gridmaps, Master-Thesis", 30. April 2012, XP055798356 ist ein Verfahren zur Analyse eines Freiraums in der Umgebung eines Fahrzeugs bekannt, das auf der Verwendung eines Belegungsgitters beruht.

Der Erfindung liegt die Aufgabe zu Grunde, ein neuartiges Verfahren zur Bereitstellung von mittels fahrzeugeigenen Sensoren erfassten Informationen über Verkehrsteilnehmer in einem Fahrzeugumfeld anzugeben.

Die Aufgabe wird erfindungsgemäß gelöst durch ein Verfahren zur Bereitstellung von mittels fahrzeugeigenen Sensoren erfassten Informationen über Verkehrsteilnehmer in einem Fahrzeugumfeld, welches die im Anspruch 1 angegebenen Merkmale aufweist, und durch ein Verfahren zum Betrieb eines automatisiert betreibbaren Fahrzeugs, welches die im abhängigen Anspruch 5 angegebenen Merkmale aufweist.

Vorteilhafte Ausgestaltungen der Erfindung sind Gegenstand der Unteransprüche.

In dem erfindungsgemäßen Verfahren zur Bereitstellung zur Übertragung an einen Backendserver von mittels fahrzeugeigenen Sensoren eines Fahrzeugs erfassten

Informationen über Verkehrsteilnehmer in einem Fahrzeugumfeld des Fahrzeugs werden die erfassten Informationen als Datenstrukturen bereitgestellt, von denen jede Datenstruktur einen Vektor repräsentiert der den jeweiligen Verkehrsteilnehmer beschreibt. Jeder der Vektoren ist dabei einer Zelle eines vorgegebenen fahrzeugfesten Belegungsgitters zugeordnet, in welcher sich der Verkehrsteilnehmer befindet, auf den sich die jeweiligen Informationen beziehen. Jeder der Vektoren umfasst dabei als Daten zumindest Koordinaten der zugeordneten Zelle, in welcher sich der jeweilige Verkehrsteilnehmer befindet, einen Geschwindigkeitsvektor, welcher eine Geschwindigkeit des jeweiligen Verkehrsteilnehmers repräsentiert, einen Zeitstempel, welcher einen Zeitpunkt einer Erfassung des jeweiligen Verkehrsteilnehmers repräsentiert, und eine Objektklasse, welche einen Typ des jeweiligen Verkehrsteilnehmers repräsentiert. Die als Vektoren bereitgestellten Informationen über die Verkehrsteilnehmer werden vorzugsweise in einem Datenfeld zusammengefasst und als Datenfeld zu dem Backendserver übertragen.

Das Verfahren ermöglicht ein Tracking von Verkehrsteilnehmern über eine komplette so genannte "Operational Design Domain" (kurz: ODD). Dabei kann bei Zurverfügungstellung der auf dem Backendserver vorhandenen Informationen an eine Fahrzeugflotte für die komplette Fahrzeugflotte ein einheitliches Bild über eine Verkehrssituation mit hohem Detailgrad hinsichtlich einer zeitlichen und räumlichen Auflösung erzeugt werden. Das Verfahren ermöglicht dabei eine sichere Pfadplanung, eine frühzeitige Kollisionsvermeidung und damit ein gleichmäßigeres Fahren eines automatisiert fahrenden Fahrzeugs.

Als Zusatzinformationen werden eine Position des Fahrzeugs und/oder eine Ausrichtung des Fahrzeugs und/oder eine Definition des Belegungsgitters betreffende Belegungsgitterinformationen an den Backendserver übertragen. Dies ermöglicht es dem Backendserver, eine zuverlässige und exakte Umrechnung der vom Fahrzeug erhaltenen Informationen in ein globales Koordinatensystem vorzunehmen und so weiteren Fahrzeugen zur Verfügung zu stellen.

Hierzu führt der Backendserver basierend auf den Zusatzinformationen eine Koordinatentransformation durch, durch welche die als Datenfeld von einem Fahrzeug empfangenen Vektoren aus dem fahrzeugfesten Belegungsgitter dieses Fahrzeugs in ein vorgegebenes globales, ortsfestes Belegungsgitter transformiert werden.

In einer weiteren möglichen Ausgestaltung des Verfahrens werden die in das globale Belegungsgitter transformierten Vektoren anderen Fahrzeugen für einen Abruf bereitgestellt, so dass diese die Informationen für ihren eigenen Fahrbetrieb nutzen können.

In einer weiteren möglichen Ausgestaltung des Verfahrens werden bei einer bei einem Abruf erfolgten Übertragung die transformierten Vektoren als Datenfeld vom Backendserver an zumindest ein weiteres Fahrzeug übertragen, wobei jeder Vektor einer Zelle des globalen Belegungsgitters, in welcher sich ein von den jeweiligen Informationen beschriebener Verkehrsteilnehmer befindet, zugeordnet ist. Hierbei umfasst jeder Vektor zumindest Koordinaten der zugeordneten Zelle, in welcher sich der jeweilige Verkehrsteilnehmer befindet, einen Geschwindigkeitsvektor, welcher eine Geschwindigkeit des jeweiligen Verkehrsteilnehmers repräsentiert, einen Zeitstempel, welcher einen Zeitpunkt einer Erfassung des jeweiligen Verkehrsteilnehmers repräsentiert, und eine Objektklasse, welche einen Typ des jeweiligen Verkehrsteilnehmers repräsentiert. Dies unterstützt das Tracking von Verkehrsteilnehmern über die komplette "Operational Design Domain" auch für andere Fahrzeuge einer Fahrzeugflotte zur Erzeugung eines einheitlichen Bilds über eine Verkehrssituation mit hohem Detailgrad hinsichtlich einer zeitlichen und räumlichen Auflösung. Somit sind für die weiteren Fahrzeuge eine sichere Pfadplanung, eine frühzeitige Kollisionsvermeidung und damit ein gleichmäßigeres Fahren der automatisiert fahrenden Fahrzeuge realisierbar.

In einer weiteren möglichen Ausgestaltung des Verfahrens werden die anderen Fahrzeuge in einer zu einem automatisierten, insbesondere hochautomatisierten oder autonomen Betrieb ausgebildeten Fahrzeugflotte automatisiert betrieben.

In dem erfindungsgemäßen Verfahren zum Betrieb eines automatisiert, insbesondere hochautomatisiert oder autonom betreibbaren Fahrzeugs, werden die vom Backendserver abgerufenen Informationen beim automatisierten Betrieb des Fahrzeugs berücksichtigt. Zu einem automatisierten, insbesondere hochautomatisierten oder autonomen Fahrbetrieb eines Fahrzeugs ist die Kenntnis einer Fahrzeugumgebung zwingend erforderlich. Hierzu ist eine ausreichende Reichweite von fahrzeugeigenen Sensoren zur Erfassung der Fahrzeugumgebung und ein daraus resultierendes ausreichend großes Sichtfeld des Fahrzeugs für eine zuverlässige Umgebungserfassung erforderlich. Insbesondere in einem urbanen Umfeld ist die Sensorreichweite und daraus folgend das Sichtfeld des Fahrzeugs beschränkt. Mittels des Verfahrens wird das Problem einer solchen Beschränkung der Sensorsichtweite insbesondere für automatisiert fahrende Fahrzeuge einer Fahrzeugflotte gelöst, indem diesen von zumindest einem Fahrzeug an den Backendserver übertragene Informationen der Fahrzeugumgebung zur Verfügung gestellt werden, so dass diese mit Informationen versorgt werden, welche außerhalb ihrer eigenen Sensorreichweite liegen. Dadurch sind die Fahrzeuge nicht auf die Reichweite ihrer Sensoren beschränkt. Dabei ist es für ein Fahrzeug im Rahmen seiner Trajektorienplanung aufgrund der vom Backendserver abgerufenen Informationen möglich, ein Umweltmodell zu erstellen, das über die Reichweite seiner Sensoren hinausreicht und Bereiche in die Trajektorienplanung miteinzubeziehen, die für die Sensoren verdeckt sind oder außerhalb deren Reichweite liegen. Somit kann eine langfristige sowie optimierte Routenplanung durchgeführt werden. Des Weiteren wird eine Überprüfung der fahrzeugeigenen Sensoren, beispielsweise hinsichtlich einer falschen Wahrnehmung der Sensoren, mit dem Backendserver als externe Quelle ermöglicht. Mit den vom Backendserver erhaltenen Informationen erhält das Fahrzeug zusätzliche Informationen, die zur Überprüfung der Funktionsfähigkeit der fahrzeugeigenen Sensoren und zur Identifizierung von funktionsbeeinträchtigten Sensoren herangezogen werden können.

Ausführungsbeispiele der Erfindung werden im Folgenden anhand von Zeichnungen näher erläutert.

Dabei zeigen:
- Fig. 1: schematisch eine perspektivische Ansicht eines Belegungsgitters mit einem Fahrzeug und einem weiteren Verkehrsteilnehmer zu einem ersten Zeitpunkt und eine perspektivische Ansicht des Belegungsgitters mit dem Fahrzeug und dem weiteren Verkehrsteilnehmer zu einem zweiten Zeitpunkt,
- Fig. 2: schematisch ein Belegungsgitter eines städtischen Bereichs,
- Fig. 3: schematisch eine Koordinatentransformation eines fahrzeugfesten Belegungsgitters und dessen Inhalts in ein ortsfestes, globales Belegungsgitter,
- Fig. 4: schematisch ein globales, ortsfestes Belegungsgitter mit zwei in dieses transformierten fahrzeugfesten Belegungsgittern zweier Fahrzeuge und
- Fig. 5: schematisch eine Bereitstellung von mittels fahrzeugeigenen Sensoren erfassten Informationen über Verkehrsteilnehmer in einem Fahrzeugumfeld an einen Backendserver sowie einen Abruf dieser Informationen von dem Backendserver.

Einander entsprechende Teile sind in allen Figuren mit den gleichen Bezugszeichen versehen.

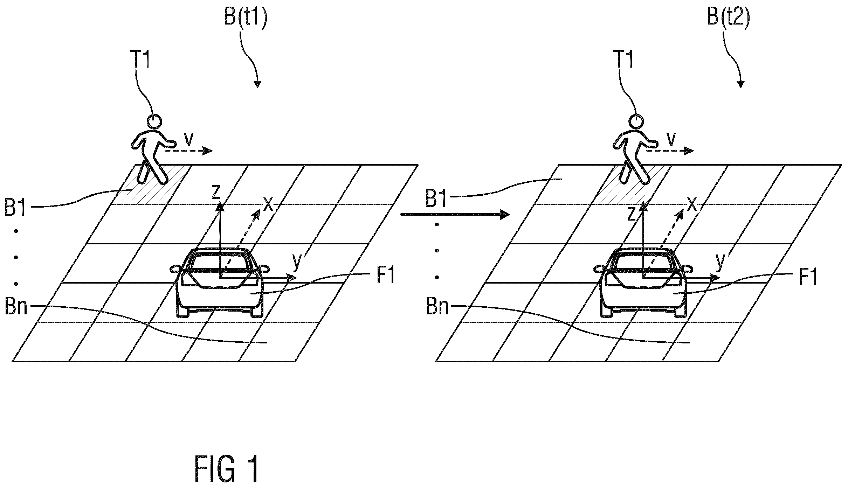

In Figur 1 ist eine perspektivische Ansicht eines Fahrzeugs F1, eines fahrzeugzentrischen Belegungsgitters B des Fahrzeugs F1, auch als occupancy grid bezeichnet und einem weiteren Verkehrsteilnehmer T1 zu einem ersten Zeitpunkt t1 und eine perspektivische Ansicht des Belegungsgitters B mit dem Fahrzeug F1 und dem weiteren Verkehrsteilnehmer T1 zu einem auf den ersten Zeitpunkt t1 folgenden zweiten Zeitpunkt t2 dargestellt.

Dabei bewegt sich der Verkehrsteilnehmer T1 mit einer Geschwindigkeit v.

Das Fahrzeug F1 gehört beispielsweise einer Fahrzeugflotte an und ist zu einem automatisierten, insbesondere hochautomatisierten oder autonomen Betrieb ausgebildet. Bei solch einem automatisierten Fahrbetrieb stellt eine Vorhersage eines Verhaltens von Verkehrsteilnehmern T1 eine große Herausforderung dar. In komplexen Verkehrsszenarien ist es oft schwierig, das Verhalten aller wahrgenommenen Verkehrsteilnehmer T1 zu verfolgen und vorherzusagen. Auch ist hierzu ein großer Rechenaufwand erforderlich.

Zu einer Vorhersage des Verhaltens wird vorliegend das Belegungsgitter B verwendet, wobei das Fahrzeug F1 ein fahrzeugzentriertes Koordinatensystem mit den Koordinaten x, y, z aufweist. Die X-Koordinate x ist dabei immer nach vorn gerichtet. Die anderen mit den Koordinaten y, z beschriebenen Achsen stehen senkrecht zu dieser. Um das Fahrzeug F1 wird ein Raster bzw. Gitter erstellt, welches statisch um das Fahrzeug F1 herum ausgebildet ist und sich mit dem Fahrzeug F1 mitbewegt und im Erfassungsbereich seiner nicht näher dargestellten fahrzeugeigenen Sensoren liegt.

Das Fahrzeug F1 lokalisiert mit seinen Sensoren alle Verkehrsteilnehmer T1, beispielsweise Fußgänger, Radfahrer, Personenkraftwagen, Lastkraftwagen, Busse usw., und deren relative Entfernung zum Fahrzeug F1, in seiner Fahrzeugumgebung. Neben den Verkehrsteilnehmern werden auch statische Objekte erfasst und lokalisiert, bspw. Baustellen oder sonstige Hindernisse auf der Fahrbahn. Die Erfassung kann dabei mittels einer Vielzahl von Sensoren und/oder einer Kombination verschiedener Sensoren, beispielsweise Radar-, Lidar-, Kamera- und/oder Ultraschallsensoren sowie einer entsprechenden Datenverarbeitung, beispielsweise eines Deep-Learning-Algorithmus, durchgeführt werden.

Ein erfasster Verkehrsteilnehmer T1 wird durch eine Datenstruktur D beschrieben, die einen Vektor repräsentiert. Der den jeweiligen Verkehrsteilnehmer T1 repräsentierende Vektor wird dabei eine aus Informationen gebildet, die mittels der fahrzeugeigenen Sensoren erfasst worden sind. Jeder Vektor umfasst dabei als Informationen Daten, die eine Position des jeweiligen Verkehrsteilnehmers T1 relativ zum Fahrzeug F1 in Form von x-, y- und z-Koordinaten x, y, z einer von dem Verkehrsteilnehmer T1 belegten Zelle B1 bis Bn des Belegungsgitters B beschreiben, wobei die z-Koordinate z eine Höhe des jeweiligen Verkehrsteilnehmers T1 beschreiben. Weiterhin umfasst der Vektor einen Geschwindigkeitsvektor, welcher die Geschwindigkeit v des jeweiligen Verkehrsteilnehmers T1 repräsentiert, einen Zeitstempel, welcher einen Zeitpunkt t1, t2 einer Erfassung des jeweiligen Verkehrsteilnehmers T1 repräsentiert, und eine Objektklasse, welche einen Typ des jeweiligen Verkehrsteilnehmers T1 repräsentiert. Weiterhin kann der Vektor zusätzlich eine Erfassungssicherheit, welche sich beispielsweise daraus ergibt, welcher Sensor den Verkehrsteilnehmer T1 erkannt hat, und weitere Informationen, beispielsweise eine Absicht des Verkehrsteilnehmers T1, umfassen.

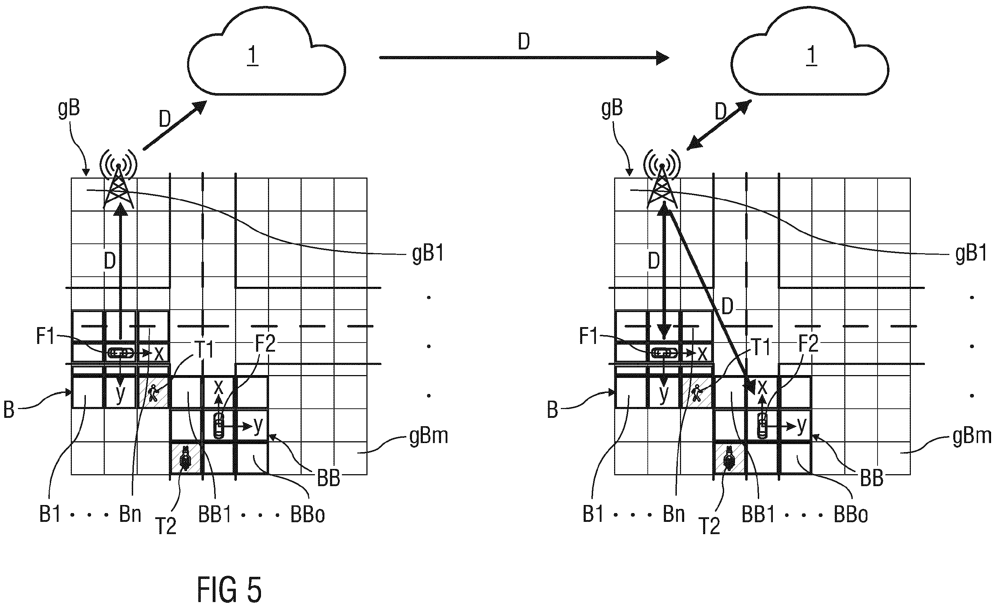

Das Belegungsgitter B ist ein 2,5-dimensionales Gitter, das heißt es ist ein zweidimensionales Raster, wobei jedoch zu allen Verkehrsteilnehmern T1 deren Höhe im jeweiligen Vektor als z-Koordinate z gespeichert ist. Dabei kann das zweidimensionale Raster in eine Matrix geschrieben werden, wobei jeder Zelle B1 bis Bn eine eigene x-Koordinate x und eine eigene y-Koordinate y zugeordnet wird. Zur Bildung des Belegungsgitters B wird das zweidimensionale Raster mit allen durch die fahrzeugeigenen Sensoren erfassten erforderlichen Informationen überlagert und/oder kombiniert. Das heißt, die die einzelnen Verkehrsteilnehmer beschreibenden Datenstrukturen D werden zu einem Datenfeld zusammengefasst und, wie in Figur 5 angedeutet, zu einem Backendserver 1 übertragen.

Ein Zelle B1 bis Bn des Belegungsgitters B kann dabei belegt oder nicht belegt sein. Zum Zeitpunkt t1 ist beispielsweise ein als Fußgänger ausgebildeter Verkehrsteilnehmer T1 mit der ihn beschreibenden Datenstruktur D in dem Belegungsgitter B in der Zelle B1 dargestellt. Alle anderen Zellen B2 bis Bn sind nicht mit Verkehrsteilnehmern T1 belegt, wobei die Datenstruktur D für die leeren Zellen B2 bis Bn auf den Wert Null gesetzt werden.

Das Kombinieren des Belegungsgitters B mit den Datenstrukturen D der jeweiligen Verkehrsteilnehmer erzeugt eine Umgebungsdarstellung zum Zeitpunkt t1.

Gemäß der Darstellung bewegt sich der Verkehrsteilnehmer T1 zwischen den beiden Zeitpunkten t1, t2 von der Zelle B1 zur benachbarten Zelle B2. Somit ändert sich zumindest der Vektor, welcher die Position des Verkehrsteilnehmers T1 relativ zum Fahrzeug F1 in Form von x-, y- und z-Koordinaten a, y, z beschreibt und in der Datenstruktur D enthalten ist, entsprechend.

Das vollständige Belegungsgitter B des Fahrzeugs F1 kann beispielsweise berechnet werden, indem die Matrix mit einem globalen Vektor, welcher alle Vektoren mit den jeweiligen Positionen der Verkehrsteilnehmer T1 relativ zum Fahrzeug F1 in Form von x-, y- und z-Koordinaten x, y, z umfasst, multipliziert wird. Alle nicht besetzten Zellen B1 bis Bn werden auf den Wert Null gesetzt.

Informationen über das Verhalten von Verkehrsteilnehmern T1 werden während Test- und/oder Trainingsfahrten autonomer Fahrzeuge F1 aufgezeichnet. Die Informationen werden dabei in einem konstanten Datenstrom von Matrizen gespeichert. Dabei werden insbesondere so genannte Deep-Learning-Modelle zur Verarbeitung der Informationen zur Vorhersage eines zukünftigen Verhaltens von Verkehrsteilnehmern T1 verwendet.

Beispielsweise wird ein künstliches neuronales Netz mit einem Deep-Learning-Modell erstellt, welches die Informationen aus den Test- und/oder Trainingsfahrten verarbeitet. Mit wachsender Anzahl von Informationen wird das Modell präziser, um ein Verhalten von Verkehrsteilnehmern T1 in der Zukunft für eine Mehrzahl von Zeitpunkten t1, t2 vorherzusagen.

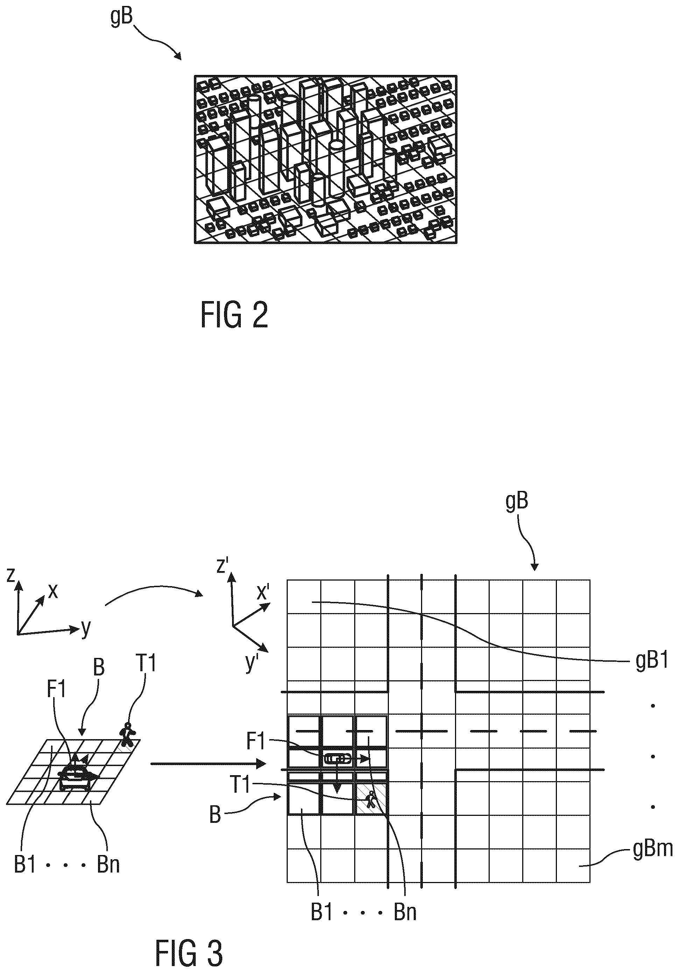

Das zuvor beschriebene Konzept wird zusätzlich auf ein stadtweites globales Belegungsgitter gB mit einem einheitlichen globalen Koordinatensystem skaliert. Ein solches globales Belegungsgitter gB eines städtischen Bereichs zeigt Figur 2.

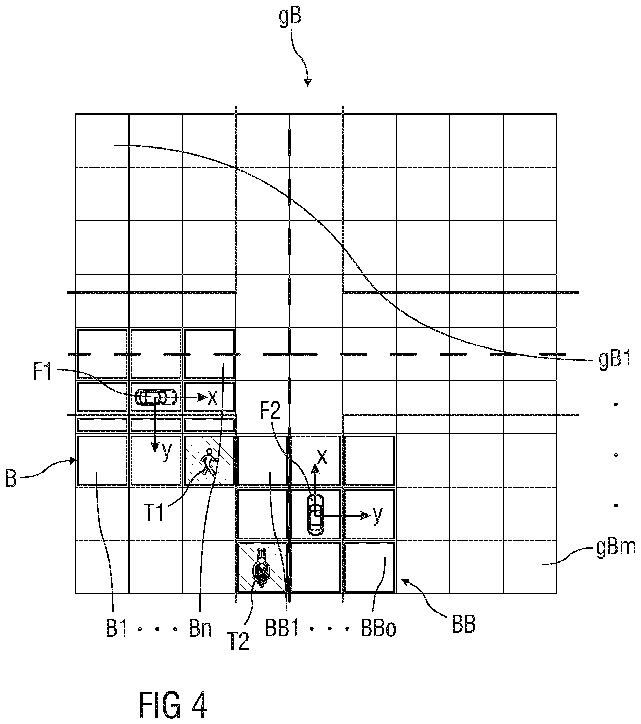

In Figur 3 ist eine Koordinatentransformation eines fahrzeugfesten Belegungsgitters B und dessen Inhalts in ein ortsfestes, globales Belegungsgitter gB, auch als "Operational Design Domain", kurz ODD, bezeichnet, dargestellt. Bei dieser Koordinatentransformation wird das gesamte fahrzeugfeste Belegungsgitter B des Fahrzeugs F1 mit einem kohärenten Raster abgedeckt, welches für alle darin automatisiert betriebenen Fahrzeuge F1, F2, welche insbesondere einer Fahrzeugflotte angehören, gleich ist. Das Fahrzeug F2 ist in Figur 4 näher dargestellt.

Das fahrzeugzentrierte Koordinatensystem des automatisiert fahrenden Fahrzeugs F1 mit den Koordinaten x, y, z und dem zugehörigen Belegungsgitter B wird in ein globales Koordinatensystem mit den Koordinaten x', y', z' transformiert. Ziel ist es, ein einheitliches globales Belegungsgitter gB mit allen von Sensoren erfassten Informationen aller in dem globalen Belegungsgitter gB betriebenen automatisiert fahrenden Fahrzeuge F1, F2 zu erstellen. Jedes automatisiert fahrende Fahrzeug F1, F2 teilt seine sensorisch erfassten Informationen mit einem in Figur 5 dargestellten Backendserver 1. Die geteilten Informationen enthalten ein Datenfeld mit den die Fahrzeuge F1, F2 beschreibenden Datenstrukturen D. Dabei enthalten nur belegte Zellen gB1 bis gBm des globalen Belegungsgitters gB Informationen. Jede nicht belegte Zelle gB1 bis gBm erhält den Wert Null. Somit kann ein Datenstrom minimiert und auf eine große Fahrzeugflotte automatisiert fahrender Fahrzeuge F1, F2 für die Operational Design Domain skaliert werden. Dabei kann eine geringe Latenz realisiert werden, welche ein wesentliches Element ist, um eine Betriebsfähigkeit sicherzustellen.

Die Koordinatentransformation stellt dabei sicher, dass alle Informationen erhalten bleiben. Es werden nur koordinatenabhängige Informationen in den jeweiligen Datenstrukturen D transformiert, beispielsweise die Koordinaten der Zellen und der Geschwindigkeitsvektor. Erfasste Verkehrsteilnehmer T1 werden sowohl im fahrzeugzentrierten Belegungsgitter B als auch im globalen Belegungsgitter gB dargestellt.

Wie Figur 4 zu entnehmen ist, welche ein globales Belegungsgitter gB mit zwei in dieses transformierten fahrzeugfesten Belegungsgittern B, BB zweier Fahrzeuge F1, F2 darstellt, ist den Fahrzeugen F1, F2 jeweils ein separates fahrzeugzentriertes Belegungsgitter B, BB zugeordnet. Dabei können die Fahrzeuge F1, F2 dieselben Verkehrsteilnehmer T1, T2 oder unterschiedliche Verkehrsteilnehmer in jeweils unterschiedlichen fahrzeugzentrierten Zellen B1 bis Bn, BB1 bis BBo erfassen.

Durch das Hochladen ihres jeweiligen Belegungsgitters B, BB auf den Backendserver 1 und das Erstellen eines globalen Belegungsgitters gB belegen doppelt wahrgenommene Verkehrsteilnehmer T1, T2 aufgrund der Koordinatentransformation dieselbe Zelle gB1 bis gBm im globalen Belegungsgitter gB. Dabei erhält ein doppelt erfasster Verkehrsteilnehmer T1, T2 ein höheres Vertrauen bzw. eine größere Erfassungssicherheit, da er unabhängig von zwei automatisiert betriebenen Fahrzeugen F1, F2 erfasst wurde.

Figur 5 zeigt eine Bereitstellung von mittels fahrzeugeigenen Sensoren erfassten Informationen über Verkehrsteilnehmer T1, T2 in einem Fahrzeugumfeld an einen Backendserver 1 sowie einen Abruf dieser Informationen von dem Backendserver 1.

Nach dem Hochladen aller fahrzeugzentrierten Belegungsgitter B, BB auf den Backendserver 1 für den Zeitpunkt t1 wird das globale Belegungsgitter gB anhand der Koordinatentransformationen einschließlich aller Verkehrsteilnehmer T1, T2 berechnet.

Das globale Belegungsgitter gB wird anschließend für einen künstlichen Zeitstempel t1* auf alle Fahrzeuge F1, F2 heruntergeladen. Jedes Fahrzeug F1, F2 erhält dabei Informationen aller dynamischen Objekte im globalen Belegungsgitter gB. Statische Objekte, bspw. Hindernisse auf der Fahrbahn oder Baustellen, können in gleicher Weise berücksichtigt werden.

Mit den so zusätzlichen Informationen kann jedes einzelne Fahrzeug F1, F2 seine eigenen erfassten Informationen überprüfen und beispielsweise vorausplanen, dass sich Trajektorien von Verkehrsteilnehmern T1, T2 kreuzen, sowie sein Umgebungsmodell über seine Sensorreichweite hinaus erweitern.

Das globale Belegungsgitter gB skaliert dabei nur mit einer ausreichenden Anzahl von Fahrzeugen F1, F2 in der Operational Design Domain. Das globale Belegungsgitter gB enthält nur Informationen, welche von einem Fahrzeug F1, F2 erfasst wurden. Zellen gB1 bis gBm ohne fahrzeugzentriertes Update werden derart markiert, dass diese für einen bestimmten Zeitpunkt t1, t2 als nicht erfasste Zellen gB1 bis gBm beschrieben sind.

Die sensorischen Informationen des jeweiligen Fahrzeugs F1, F2 enthalten dabei alle dynamischen Objekte, insbesondere Verkehrsteilnehmer T1, T2, die im globalen Vektor, welcher alle Vektoren mit den jeweiligen Positionen der Verkehrsteilnehmer T1, T2 relativ zum entsprechenden Fahrzeug F1, F2 in Form von x-, y- und z-Koordinaten x, y, z umfasst, konsolidiert sind.

Neben der Information über die dynamischen Objekte sind auch zusätzliche Daten für einen sicheren Betrieb der Fahrzeugflotte von Interesse, welche in einer ersten Kategorie eingeordnet sind. Darüber hinaus sind auch unkritische Informationen über die Infrastruktur und einen Verkehr von Interesse, welche in eine zweite Kategorie eingeordnet sind.

In den sicherheitskritischen Informationen der ersten Kategorie sind beispielsweise Daten wie ein von der Fahrzeugflotte wahrgenommener Verkehrszeichenstatus, ungewöhnliche statische Objekte wie Parker in der zweiten Reihe, verunglückte Fahrzeuge, verlorene Fracht und ähnliche Objekte enthalten. Insbesondere in modernen Städten sind auch unkritische Informationen von erweitertem Interesse. Zu dieser zweiten Kategorie gehören beispielsweise Informationen wie belegte Parkplätze, Schlaglöcher und alle Informationen zur vorausschauenden Infrastruktur- und Stadtoptimierung.

Um auch die zuletzt genannten sicherheitskritischen und unkritischen Informationen zur Verfügung stellen zu können, sammeln die Fahrzeuge F1, F2 der Fahrzeugflotte Echtzeitinformationen über ein globales Informationsnetz. Die in den
Belegungsgittern B, BB, gB gespeicherten Informationen können durch angeforderte Daten, wie beispielsweise über freie Parkplätze, angereichert, im Backendserver 1 gesammelt und an geeignete Kanäle, beispielsweise Park-Apps, verteilt werden.

## Patentansprüche

1. Verfahren zur Bereitstellung von Informationen über Verkehrsteilnehmer (T1, T2) in einem Fahrzeugumfeld eines Fahrzeugs (F1) zur Übertragung an einen Backendserver,
wobei
- die Informationen über die Verkehrsteilnehmer (T1, T2) vom Fahrzeug (F1) mit fahrzeugeigenen Sensoren erfasst werden,
- ein fahrzeugfestes Belegungsgitter (B, BB) für das Fahrzeug (F1) vorgegeben wird,
- die erfassten Informationen vom Fahrzeug (F1) als Datenstrukturen (D) bereitgestellt werden, von denen jede Datenstruktur (D) einen Vektor repräsentiert,
- jeder der Vektoren einer Zelle (B1 bis Bn, BB1 bis BBm) des vorgegebenen fahrzeugfesten Belegungsgitters (B, BB) zugeordnet ist, in welcher sich ein von den jeweiligen Informationen beschriebener Verkehrsteilnehmer (T1, T2) befindet,
- jeder der Vektoren zumindest folgende Daten umfasst:
- Koordinaten der zugeordneten Zelle (B1 bis Bn, BB1 bis BBm), in welcher sich der jeweilige Verkehrsteilnehmer (T1, T2) befindet,
- einen Geschwindigkeitsvektor, welcher eine Geschwindigkeit (v) des jeweiligen Verkehrsteilnehmers (T1, T2) repräsentiert,
- einen Zeitstempel, welcher einen Zeitpunkt (t1, t2) einer Erfassung des jeweiligen Verkehrsteilnehmers (T1, T2) repräsentiert, und
- eine Objektklasse, welche einen Typ des jeweiligen Verkehrsteilnehmers (T1, T2) repräsentiert. wobei
- die Datenstrukturen (D) zu einem Datenfeld zusammengefasst werden und als Datenfeld zu dem Backendserver (1) übertragen werden;
- als Zusatzinformationen
- eine Position des Fahrzeugs (F1, F2) und/oder
- eine Ausrichtung des Fahrzeugs (F1, F2) und/oder
- eine Definition des Belegungsgitters (B, BB) betreffende Belegungsgitterinformationen an den Backendserver (1) übertragen werden und
- der Backendserver (1) basierend auf den Zusatzinformationen eine Koordinatentransformation durchführt, in welcher die von einem Fahrzeug (F1, F2) als Datenfeld empfangenen Vektoren aus dem fahrzeugfesten Belegungsgitter (B, BB) dieses Fahrzeugs (F1, F2) in ein vorgegebenes globales, ortsfestes Belegungsgitter (gB) transformiert werden.

2. Verfahren nach Anspruch 1,
**dadurch gekennzeichnet, dass**
die in das globale Belegungsgitter (gB) transformierten Vektoren anderen Fahrzeugen (F1, F2) für einen Abruf bereitgestellt werden.

3. Verfahren nach Anspruch 2,
**dadurch gekennzeichnet, dass**
bei einer bei einem Abruf erfolgten Übertragung
- die transformierten Vektoren als Datenfeld vom Backendserver (1) an zumindest ein weiteres Fahrzeug (F1, F2) übertragen werden,
- wobei jeder Vektor einer Zelle (gB1 bis gBo) des globalen Belegungsgitters (gB), in welcher sich ein von den jeweiligen Informationen beschriebener Verkehrsteilnehmer (T1, T2) befindet, zugeordnet ist und zumindest folgende Daten umfasst:
- Koordinaten der zugeordneten Zelle (gB1 bis gBo), in welcher sich der jeweilige Verkehrsteilnehmer (T1, T2) befindet,
- einen Geschwindigkeitsvektor, welcher eine Geschwindigkeit (v) des jeweiligen Verkehrsteilnehmers (T1, T2) repräsentiert,
- einen Zeitstempel, welcher einen Zeitpunkt (t1, t2) einer Erfassung des jeweiligen Verkehrsteilnehmers (T1, T2) repräsentiert, und
- eine Objektklasse, welche einen Typ des jeweiligen Verkehrsteilnehmers (T1, T2) repräsentiert.

4. Verfahren nach einem der Ansprüche 2 oder 3,
**dadurch gekennzeichnet, dass**
die anderen Fahrzeuge (F1, F2) in einer zu einem automatisierten, insbesondere hochautomatisierten oder autonomen Betrieb ausgebildeten Fahrzeugflotte automatisiert betrieben werden.

5. Verfahren zum Betrieb eines automatisiert, insbesondere hochautomatisiert oder autonom betreibbaren Fahrzeugs (F1, F2), wobei das Verfahren gemäß Anspruch 2 ausgeführt wird und die gemäß Anspruch 2 vom Backendserver (1) abgerufenen Informationen beim automatisierten Betrieb berücksichtigt werden.

## Claims

1. Method for providing information about road users (T1, T2) in the vehicle surroundings of a vehicle (F1) for transmission to a backend server,
wherein
- the information about the road users (T1, T2) is detected by the vehicle (F1) using on-board sensors,
- a vehicle-fixed occupancy grid (B, BB) for the vehicle (F1) is predetermined,
- the detected information is provided by the vehicle (F1) as data structures (D), each data structure (D) representing a vector,
- each of the vectors is assigned to a cell (B1 to Bn, BB1 to BBm) of the predetermined vehicle-fixed occupancy grid (B, BB), in which cell a road user (T1, T2) described by the corresponding information is located,
- each of the vectors comprises at least the following data:
- coordinates of the assigned cell (B1 to Bn, BB1 to BBm) in which the relevant road user (T1, T2) is located,
- a speed vector which represents a speed (v) of the relevant road user (T1, T2),
- a time stamp which represents a time (t1, t2) of detection of the relevant road user (T1, T2), and
- an object class which represents a type of the relevant road user (T1, T2), wherein
- the data structures (D) are combined into a data field and transmitted as a data field to the backend server (1);
- as additional information
- a position of the vehicle (F1, F2) and/or
- an orientation of the vehicle (F1, F2) and/or
- occupancy grid information relating to a definition of the occupancy grid (B, BB)
are transmitted to the backend server (1) and
- the backend server (1) carries out a coordinate transformation on the basis of the additional information, in which the vectors received from a vehicle (F1, F2) as a data field are transformed from the vehicle-fixed occupancy grid (B, BB) of this vehicle (F1, F2) into a predetermined global, stationary occupancy grid (gB).

2. Method according to claim 1,
**characterized in that**
the vectors transformed into the global occupancy grid (gB) are made available to other vehicles (F1, F2) for retrieval.

3. Method according to claim 2,
**characterized in that**
in the case of a transmission made during a retrieval,
- the transformed vectors are transmitted as a data field from the backend server (1) to at least one further vehicle (F1, F2),
- wherein each vector is assigned to a cell (gB1 to gBo) of the global occupancy grid (gB), in which cell a road user (T1, T2) described by the corresponding information is located, and comprises at least the following data:
- coordinates of the assigned cell (gB1 to gBo) in which the relevant road user (T1, T2) is located,
- a speed vector which represents a speed (v) of the relevant road user (T1, T2),
- a time stamp which represents a time (t1, t2) of detection of the relevant road user (T1, T2), and
- an object class which represents a type of the relevant road user (T1, T2).

4. Method according to either claim 2 or claim 3,
**characterized in that**
the other vehicles (F1, F2) are operated in an automated manner in a vehicle fleet designed for automated, in particular highly automated or autonomous operation.

5. Method for operating a vehicle (F1, F2) that can be operated in an automated, in particular highly automated or autonomous manner, wherein the method is carried out according to claim 2 and the information retrieved from the backend server (1) according to claim 2 is taken into account in the automated operation.

## Revendications

1. Procédé permettant de fournir des informations sur des usagers de la route (T1, T2) dans un environnement de véhicule d'un véhicule (F1) pour transmission à un serveur dorsal,
dans lequel
- les informations sur les usagers de la route (T1, T2) sont recueillies par le véhicule (F1) à l'aide de capteurs embarqués,
- une grille d'occupation (B, BB) solidaire du véhicule est prédéfinie pour le véhicule (F1),
- les informations recueillies sont fournies par le véhicule (F1) sous la forme de structures de données (D), dont chaque structure de données (D) représente un vecteur,
- chacun des vecteurs est associé à une cellule (B1 à Bn, BB1 à BBm) de la grille d'occupation (B, BB) prédéfinie solidaire du véhicule, dans laquelle cellule se trouve un usager de la route (T1, T2) décrit par les informations respectives,
- chacun des vecteurs comprend au moins les données suivantes :
- coordonnées de la cellule (B1 à Bn, BB1 à BBm) associée dans laquelle se trouve l'usager de la route (T1, T2) respectif,
- un vecteur de vitesse qui représente une vitesse (v) de l'usager de la route (T1, T2) respectif,
- un horodatage qui représente un moment (t1, t2) d'un recueil de l'usager de la route (T1, T2) respectif, et
- une classe d'objets qui représente un type de l'usager de la route (T1, T2) respectif. dans lequel
- les structures de données (D) sont regroupées en un champ de données et sont transmises en tant que champ de données au serveur dorsal (1);
- comme informations complémentaires
- une position du véhicule (F1, F2) et/ou
- une orientation du véhicule (F1, F2) et/ou
- des informations de grille d'occupation concernant une définition de la grille d'occupation (B, BB) sont transmises au serveur dorsal (1) et
- le serveur dorsal (1) effectue, sur la base des informations complémentaires, une transformation de coordonnées dans laquelle les vecteurs reçus par un véhicule (F1, F2) en tant que champ de données sont transformés de la grille d'occupation (B, BB) solidaire du véhicule dudit véhicule (F1, F2) en une grille d'occupation (gB) globale prédéfinie et solidaire du lieu.

2. Procédé selon la revendication 1,
**caractérisé en ce que**
les vecteurs transformés dans la grille d'occupation (gB) globale sont fournis à d'autres véhicules (F1, F2) pour un appel.

3. Procédé selon la revendication 2,
**caractérisé en ce que**
dans le cas d'une transmission effectuée lors d'un appel
- les vecteurs transformés sont transmis sous forme de champ de données du serveur dorsal (1) à au moins un autre véhicule (F1, F2),
- dans lequel chaque vecteur est associé à une cellule (gB1 à gBo) de la grille d'occupation (gB) globale dans laquelle se trouve un usager de la route (T1, T2) décrit par les informations respectives, et comprenant au moins les données suivantes :
- coordonnées de la cellule (gB1 à gBo) associée dans laquelle se trouve l'usager de la route (T1, T2) respectif,
- un vecteur de vitesse qui représente une vitesse (v) de l'usager de la route (T1, T2) respectif,
- un horodatage qui représente un moment (t1, t2) d'un recueil de l'usager de la route (T1, T2) respectif, et
- une classe d'objets qui représente un type de l'usager de la route (T1, T2) respectif.

4. Procédé selon l'une des revendications 2 ou 3,
**caractérisé en ce que**
les autres véhicules (F1, F2) sont exploités de manière automatisée dans une flotte de véhicules conçue pour un fonctionnement automatisé, en particulier hautement automatisé ou autonome.

5. Procédé d'exploitation d'un véhicule (F1, F2) pouvant être exploité de manière automatisée, en particulier hautement automatisée ou autonome, dans lequel le procédé selon la revendication 2 est exécuté et les informations appelées du serveur dorsal (1) selon la revendication 2 sont prises en compte lors de l'exploitation automatisée.
